(19) Europäisches Patentamt
European Patent Office
Office européen des brevets

(11) EP 3 093 724 A1

(12) EUROPÄISCHE PATENTANMELDUNG

(43) Veröffentlichungstag:
16.11.2016 Patentblatt 2016/46

(51) Int Cl.:
*G05B 23/02* (2006.01)

(21) Anmeldenummer: 15167398.5

(22) Anmeldetag: 12.05.2015

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA

(71) Anmelder: STEAG Energy Services GmbH
45128 Essen (DE)

(72) Erfinder:
• WAGNER, Joël
  45136 Essen (DE)
• SCHRANDT, Christian
  22529 Hamburg (DE)
• SCHULZ, Axel
  22609 Hamburg (DE)
• RIECK, Detlef
  17493 Greifswald (DE)

(74) Vertreter: Zenz Patentanwälte Partnerschaft mbB
Rüttenscheider Straße 2
45128 Essen (DE)

(54) **VERFAHREN ZUR PROGNOSE VON INSPEKTIONS- UND WARTUNGSINTERVALLEN BEI ENERGIEERZEUGUNGSANLAGEN UND PROZESSANLAGEN**

(57) Ein Verfahren zur Betriebskontrolle von Kraftwerksanlagen oder Prozessanlagen, wobei die Anlage durch Lastwechsel belastete Bauteile aufweist. Zu einem oder mehreren der Bauteile werden während des Betriebs wiederholt Messdaten der auf die Bauteile einwirkenden Drücke $p_t$ und/oder der vorherrschenden Temperaturen $T_t$ erfasst und in ein Online-Monitoring-System gespeist.

In dem Online-Monitoring-System wird anhand der Online-Daten eine Modellrechnung der Beanspruchung des Bauteils vorgenommen und es werden wiederholt aktualisierte Kennwerte der Beanspruchung ausgegeben und gespeichert.

In dem Online-Monitoring System wird außerdem unter Verwendung der Online-Daten und eines Rissentwicklungsmodells eine Online-Risswachstumsberechnung für wenigstens eines der Bauteile durchgeführt, wobei für jede Risswachstumsberechnung anfänglich wenigstens ein Start-Rissparameter $a_{init}$ vorgegeben wird und die Rissparameter wiederholt aktualisiert und als Kennwerte $a_t$ der Beanspruchung ausgegeben und gespeichert werden.

Fig. 2

10
Auswahl repräsentativer Bauteile

20
Berechnung von Temperaturfeldern sowie Temperatur- und Innendruckspannungen für Einheitslastfälle in den repräsentativen Bauteilen

30
Festlegung von Ort, Orientierung und Größe der Risspostulate in den repräsentativen Bauteilen

40
Bestimmung der Einfluss- und Formfunktionen in Abhängigkeit von der Bauteil- und Rissgeometrie und des Spannungsprofils der Einheitslasten

50
Berechnung der kritischen und der max. zulässigen Rissgröße der Risspostulate auf Basis der maximalen Belastungen in den repräsentativen Bauteilen

60
Konfiguration des Online-Monitoring-Systems mit den Belastungs- und Rissdaten (20 - 50) sowie den bruchmechanischen Werkstoffkennwerten für die repräsentativen Bauteile

70
Messtechnische Erfassung von Druck und Temperatur mittels des Online-Monitoring-Systems für die postulierten Rissorte in den repräsentativen Bauteilen

80
Berechnung der Rissentwicklung unter Berücksichtigung der Eingabewerte, Messwerte und der bisherigen rechnerischen Rissentwicklung

90
Speicherung und Ausgabe der berechneten Rissentwicklung infolge der gemessenen Belastungszyklen

100
Berechnung und Ausgabe von Prognosen zur erwarteten Rissentwicklung und zum Zeitpunkt des Erreichens der max. zulässigen Rissgröße (spätester Inspektionstermin)

EP 3 093 724 A1

**Beschreibung**

Die Erfindung betrifft ein Verfahren zur Kalkulation der Inspektions- und Wartungsintervalle bei Einrichtungen zur Energieerzeugung, beispielsweise Kraftwerkseinrichtungen, sowie auch sonstigen Prozessanlagen.

Insbesondere betrifft die Erfindung ein Verfahren, welches die fundierte Ermittlung von Inspektionsintervallen bei Anlagen mit mechanischer und thermischer Komponentenbelastung erlaubt.

Bei technischen Anlagen ist hinsichtlich eines sicheren und ökonomischen Betriebs die Einhaltung technisch und ökonomisch sinnvoller Inspektions- und Wartungsintervalle erforderlich. Dazu ist es üblich, zur Gewährleistung der Betriebssicherheit einzelne, repräsentative Komponenten in vorgegebenen Zeitabständen auf Abnutzung oder Schädigung zerstörungsfrei zu prüfen. Es ist ebenfalls bekannt, Schadenstoleranzanalysen für technische Bauteile zur Bestimmung maximal zulässiger Inspektionsintervalle auszuführen.

Weiterhin ist es üblich, sogenannte Online-Monitoring-Systeme zu verwenden, welche Betriebsparameter während des Betriebs im System erfassen und verarbeiten, z. B. zur Bestimmung des Erschöpfungsgrades der überwachten Bauteile infolge Wechselbeanspruchung im Rahmen einer Ermüdungsanalyse.

Alle derartigen Methoden basieren auf dem Interesse, einerseits die Ausfallzeiten solcher großtechnischen Anlagen zu minimieren und daher die Intervale zwischen den Inspektions- und Wartungsstillständen möglichst auszudehnen, andererseits aber die Sicherheit keinesfalls zu vernachlässigen und durch rechtzeitige Inspektionen und Wartungen Schäden vorzubeugen und den Wert der Anlage zu erhalten.

Im Stand der Technik sind hierzu unterschiedliche Ansätze bekannt, dazu wird beispielhaft auf die US 2014/0257666 A1 verwiesen, bei der zum optimierten Betrieb einer Gasturbine ein berechnetes Abnutzungsmodell der Turbine für die Steuerung der Turbine unter Berücksichtigung der simulierten Abnutzungsdaten herangezogen wird.

Das Dokument US 2014/0019091 A1 beschreibt ein anderes System zur Kalkulation und Ausdehnung von Wartungsintervallen.

Aus der EP 2 736 003 A1 ist es bekannt, Kalkulationsmodelle auf Basis wirtschaftlicher und technischer Werte zu verwenden, um geeignete Zeitpunkte für die Wartungseingriffe zu kalkulieren.

Die Möglichkeiten der Analyse von Betriebsweisen von Energieanlagen und Prozessanlagen sind außerdem in Fachkreisen Gegenstand der Diskussion und Forschung (siehe z.B. "Trend Prognosis and Online Diagnostics of Thick-Walled Boiler Components for a Flexible Mode of Operation" J. Wagner, P. Deeskow, ASME 2014 Pressure Vessels & Piping Conference, July 20-24, 2014, Anaheim, California, USA).

Wie der Stand der Technik zeigt, ist es als Element der Anlagenüberwachung bekannt, Schadenstoleranzanalysen durchzuführen. Dieses Verfahren ist jedoch auf dem Gebiet der herkömmlichen Kraftwerkstechnik und Technik der Prozessanlagen derzeit nicht üblich. Derartige in anderen Industriezweigen eingesetzte Schadenstoleranzanalysen sind Verfahren der Bruchmechanik und können vor allem der Berechnung von maximal zulässigen Inspektionsintervallen dienen. Schadenstoleranzanalysen sind auch hilfreich, um die Restlebensdauer eines Bauteils im Rahmen einer Befundbewertung zu kalkulieren, wenn bei einer Inspektion des Bauteils ein Anriss im tolerierbaren Bereich ermittelt wurde.

Doch auch für Bauteile ohne rissartige Befunde werden in einigen technischen Bereichen, so beispielsweise der Flugzeugindustrie und Nuklearindustrie, Schadenstoleranzanalysen durchgeführt, um grundsätzlich die Inspektionsintervalle zu berechnen. Dabei werden die Kalkulationen meist auf Bauteile mit überwiegend zyklischer Wechselbelastung angewendet. Es wird ein sogenanntes Risspostulat getroffen (also ein Riss mit einer vorgegebenen Ausgangsgröße angenommen) und mittels der Schadenstoleranzanalyse berechnet, welcher Zeitraum bis zum Erreichen einer kritischen Risstiefe verstreichen wird, bei der Bauteilbruch oder ein Leck zu erwarten ist. Es ist zu betonen, dass derartige Risspostulate nicht mit einer Inkaufnahme von Defekten an Bauteilen zu verwechseln sind. Es wird lediglich für die Berechnung eines Inspektionsintervalls ein Riss von einer Größe postuliert, die mit den gängigen Methoden nicht zu finden ist, und berechnet, wie lange ein Bauteil mit einem solchen angenommenen Riss und dem über die Zeit fortschreitenden Risswachstum sicher betrieben werden könnte. Die angenommene Anfangsrissgröße wird in der Regel unmittelbar aus den Nachweismöglichkeiten der in der Bauteilinspektion eingesetzten zerstörungsfreien Prüfverfahren abgeleitet.

In den Wärmekraftwerken kommt eine solche Methode jedoch meist nicht zum Einsatz. Dort ist es üblich und geregelt, dass die ermüdungsführenden Bauteile ein festes, zeitlich begrenztes Inspektionsintervall besitzen. Während diese Konzepte in der Vergangenheit gute Dienste geleistet haben, ändern sich die Anforderungen an die Kraftwerke rasch und in erheblichem Umfang. In früheren Zeiten, in welchen Wärmekraftwerke mit geringen Lastwechseln betrieben wurden, waren meist die Zeitstandschädigung und Korrosion die bestimmenden Bauteil-Schädigungsmechanismen. Mit der zunehmenden Flexibilisierung des Kraftwerkbetriebes, insbesondere bei Einbindung von rasch fluktuierenden anderen Energiequellen (Windkraft, Sonnenenergie) ändert sich für Bauteile in Kraftwerken die Erschöpfungscharakteristik aufgrund der häufigen Lastwechsel. Wenn angesichts solcher geänderter Anforderungen die Schadenstoleranzanalyse als Mittel der Analyse herangezogen wird, ermöglicht ihr bekannter Einsatz bei Bauteilen grundsätzlich die Nutzung eines weiteren Bausteins der Gesamtlebensdauer zusätzlich zur Ermüdungsanalyse. Die Gesamtlebensdauer eines wechselbeanspruchten Bauteiles kann nämlich unterteilt werden in zunächst den Zeitraum von Inbetriebnahme bis zu einem tatsächlichen technischen Anriss, dieser Zeitraum kann als "Ermüdung" des Bauteiles bezeichnet werden. Dabei wird als technischer Anriss eine solche Materialtrennung verstanden, die mit optischen Mitteln oder zerstörungsfreien Prüfmethoden erkennbar und feststellbar ist. Ein solches Bauteil mit einem tatsächlich vorhandenen technischen Anriss ist jedoch nicht unmittelbar als kritisch zu betrachten, stattdessen folgt dem technischen Anriss eine Restlebensdauer mit einer Rissfortschrittsphase, bis das Bauteil ausgemustert wird oder versagt. Entsprechend setzt sich die Lebensdauer des Bauteils aus der anfänglichen anrissfreien Phase und einer Rissbildungsphase (insgesamt "Ermüdung") und einer anschließenden Rissfortschrittsphase zusammen. Die Schadenstoleranzanalyse erlaubt die Quantifizierung dieser zweiten Phase, der Rissfortschrittsphase.

Es sind am Markt sogenannte Online-Monitoring-Systeme bekannt, die den Zeitraum der Ermüdung des Bauteils erfassen. Dies bedeutet, dass die vorhandenen Systeme aus den tatsächlichen Systemdaten, also den aufgezeichneten Belastungsdaten, nach den Regeln und Richtlinien der klassischen Ermüdungsanalyse den Zeitpunkt eines technischen Anrisses kalkulieren. Dabei wird die tatsächliche Betriebsweise eines Kraftwerkes oder einer Prozessanlage messtechnisch online erfasst und die Beanspruchung der Bauteile wird bewertet. Insbesondere dienen als Überwachungsgrößen die Betriebstemperaturen und vorherrschenden Drücke am Ort ausgewählter kritischer Bauteile einer Kraftwerksanlage oder Prozessanlage, um Wechsel- und Zeitstanderschöpfung rechnerisch zu bestimmen. Ein Beispiel für ein solches System ist das System der Anmelderin mit der Bezeichnung SR1, welches eine kontinuierliche Ermüdungsüberwachung von ausgewählten Bauteilen erlaubt und somit die Planung von Inspektionen und Wartungen verbessert.

Aufgabe der Erfindung ist es, die vorhandenen Systeme dahingehend zu verbessern, dass die tatsächlich mögliche Betriebszeit eines Bauteiles noch besser abgeschätzt werden kann und weitere Beurteilungsgrößen für die Festlegung von Inspektions- und Wartungszeitpunkten bereitgestellt werden.

Diese Aufgabe wird gelöst durch ein Verfahren mit den Merkmalen des Patentanspruches 1.

Der Erfindung liegt die Beobachtung zugrunde, dass der Einsatz der Ermüdungsanalyse in der bisherigen Weise den Lebensdauerbaustein des Risswachstums außer Acht lässt, aber das Online-Monitoring nutzt. Die Erfindung macht die Anwendung der Schadenstoleranzanalysen zur Nutzung des Lebensdauerbausteins Rissfortschrittsphase deutlich belastbarer und verlässlicher, indem sie das Online-Monitoring mit der Risswachstumsberechnung kombiniert.

In den bekannten Systemen wird die Ermüdungsanalyse angewandt, um Hinweise auf stark beanspruchten Komponenten und dort auch die spannungsreichsten Bereiche zur Inspektion auszuwählen. Die Schadenstoleranzanalyse kann zusätzlich angewendet werden, um das Risswachstum in Abhängigkeit von den tatsächlichen Belastungen bis zu Erreichen der kritischen Risstiefe heranzuziehen.

Erfindungsgemäß wird also durch die Verknüpfung von Schadenstoleranzanalyse und Online-Monitoring die tatsächliche, auf erfassten Messwerten ermittelte Wechselbeanspruchung der Bauteile verwendet, um das Ermüdungsrisswachstum online zu berechnen. Die Betriebsdauer des Bauteils kann damit auf den sicheren Zeitbereich der Restlebensdauer ausgedehnt werden, wohingegen gemäß dem Stand der Technik mit den Online-Monitoring-Systemen nur der Zeitraum bis zum technischen Anriss erfasst werden kann.

Die erfindungsgemäße Online-Berechnung des Risswachstums berücksichtigt die Auswirkung der tatsächlichen, aktuellen und zurückliegenden Fahrweise eines Kraftwerks oder einer Prozessanlage auf das Wachstum eines Risses in zumindest einem repräsentativen Bauteil.

Ein wesentlicher Aspekt der Erfindung ist dabei, dass diese Online-Überwachung und Rissausbreitungskalkulation auf Basis eines postulierten oder auch angenommenen Risses erfolgen kann. Die genaue Kenntnis der bisherigen Bauteilbelastung (Belastungshistorie) ist zum Start des Verfahrens nicht erforderlich, denn es kann konservativ von einem vorhandenen technischen Anriss ausgegangen werden (d. h. vom Durchlaufen des Lebensdauerbausteins Ermüdung), unabhängig von dessen tatsächlicher Existenz. Mit anderen Worten ist es möglich, zu einem gegebenen Zeitpunkt zu postulieren, dass in einem Bauteil ein Riss vorliegt, dessen Größe an der unteren Nachweisgrenze eines technischen Anrisses liegt. Die nachfolgende online-gespeiste Rissausbreitungsberechnung gibt dann einen Überblick darüber, wie sich ein solcher postulierter Riss bei den tatsächlichen Belastungswechseln entwickelt. Dieses rechnerische Risswachstum erfasst die Restlebensdauer des Bauteils und kann zur Planung von Inspektionsintervallen herangezogen werden.

Gemäß der Erfindung werden damit feste Inspektionsintervalle durch lastabhängige Intervalle abgelöst und der Betrieb der Anlage kann optimiert werden. Unnötige Inspektionen an Bauteilen mit geringer Belastung werden eingespart und es wird dennoch ein Gewinn an Sicherheit erzielt. Sollte sich nämlich aufgrund der geänderten Anforderungen an Kraftwerke oder Prozessanlagen eine unerwartete flexible Fahrweise einstellen, so wird dies durch das Online-Monitoring erfasst und fließt durch die erfassten Daten in die Kalkulation der Rissausbreitung ein. Damit wird das Inspektionsintervall hoch belasteter Bauteile gemäß der tatsächlichen Fahrweise verringert. Schlüssel zu diesem Vorteil ist die erfindungsgemäße Speisung der Rissausbreitungsberechnung durch Online-Messwerte.

Bislang werden in Anlagen (z. B. der Nuklearindustrie), wo die Ermittlung von Inspektionsintervallen auch bereits jetzt mittels einer Schadenstoleranzanalyse erfolgt, die Angaben zu den prognostizierten zyklischen Belastungen meist aus den in der Auslegungsphase der Bauteile spezifizierten Lasten und Lastwechselhäufigkeiten abgeleitet. Diese weichen jedoch inzwischen von dem tatsächlich auftretenden Lastregime zum Teil stark ab. Die Restlebensdauer der Bauteile unter den geänderten Bedingungen muss dann erneut berechnet werden. Verwendet werden hierfür gemäß dem Stand der Technik sogenannte "Mustertransienten". Diese tragen den Charakter von nachspezifizierten Belastungen und erfassen nur unvollständig das tatsächlich auftretende Lastregime. Darüber hinaus spielt für die Rissausbreitung auch die zeitliche Abfolge zyklischer Belastungen (Intensität, Art und Häufigkeit der Belastung) eine wesentliche Rolle, die bisher nicht oder nur stark vereinfachte Berücksichtigung fand. Unterschiedliche Spannungsschwingbreiten und die zeitliche Reihenfolge der Belastungskollektive wirken sich erheblich auf den Rissfortschritt aus. Die erfindungsgemäß vorgesehene Schadenstoleranzanalyse der Rissausbreitung auf Basis von tatsächlich erfassten Betriebsdaten beseitigt diesen Nachteil.

Wesentlich für die Erfindung ist es also, das Risswachstum an ausgewählten Bauteilen mit den etablierten Methoden, jedoch unter Verwendung von tatsächlichen Lastdaten (Online-Speisung der Rissausbreitungsberechnung) zu berechnen. Die Kopplung eines Online-Monitoring-Systems mit der Berechnung der Rissausbreitung ist der wesentliche Aspekt der Erfindung.

Vorzugsweise wird das erfindungsgemäße Verfahren für die ermüdungsführenden, dickwandigen Bauteile in Wärmekraftwerken eingesetzt, bei welchen Inspektionen aus sicherheitstechnischen Gründen durchzuführen sind, weil die großen Thermospannungsschwingbreiten in der Ermüdungsanalyse zu hohen rechnerischen Erschöpfungswerten führen. Auch Bauteile, deren Austausch im Falle eines Schadens mit hohen Kosten und betrieblichen Verzögerungen verbunden sind, werden erfindungsgemäß durch das erfindungsgemäße Verfahren überwacht.

Im Falle der Wärmekraftwerke können dies beispielsweise Sammler, Formstücke, Verbindungsleitungen, Pumpengehäuse oder auch Armaturen sein. Die erfindungsgemäße Anwendung der onlinegespeisten Rissausbreitung erlaubt es, Lebensdauerreserven dieser Bauteile zu erschließen. Dies geschieht, indem im Lebensdauerbaustein Rissfortschrittsphase die maximal zulässigen Intervalle der wiederkehrenden Inspektion rechnerisch mit Hilfe der im Online-Monitoring anfallenden Betriebsparameter laufend nachjustiert werden.

Die erfindungsgemäße Berechnung von Inspektionsintervallen erfolgt vorzugsweise schrittweise. Zunächst kann in einem ermüdungstechnisch hoch ausgelasteten Bereich eines Bauteils (d. h. der rechnerische Erschöpfungsgrad aus der Ermüdungsanalyse liegt nahe dem Wert 100 %) ein hypothetischer Riss postuliert werden. Für diesen Riss werden Annahmen hinsichtlich Länge und Tiefe getroffen, welche z. B. aus den technischen Nachweisgrenzen der zerstörungsfreien Prüfmethode (vorzugsweise Ultraschall) abgeleitet werden. Dabei wird konservativ unterstellt, dass ein möglicherweise vorhandener Riss aufgrund seiner geringen Größe an der unteren Nachweisgrenze der Prüfmethode während der letzten Inspektion nicht entdeckt worden ist.

Erfindungsgemäß wird dann mit Verfahren und Kennwerten der linear-elastischen Bruchmechanik, ausgehend von der onlineermittelten auftretenden Zyklenzahl, die theoretische Rissausbreitung und Risstiefe wiederholt online berechnet, also insbesondere bis zum jeweiligen Betriebszeitpunkt (Risswachstumsanalyse). Diese Werte der Rissausbreitung werden aktualisiert als Teil des Online-Monitoring-Systems ausgegeben. Bereits auf Basis dieser Erkenntnisse lassen sich vorhandene Lebensdauerreserven bis zum Erreichen einer kritischen Risstiefe abschätzen.

Diese kritische Risstiefe, d. h. die Rissgröße, bei der bei Auftreten maximaler Bauteilbelastungen eine instabile Risserweiterung (Bauteilbruch) oder ein Leck (Wanddurchbruch) zu erwarten ist, muss vorher berechnet werden.

Zusätzlich kann auf Grundlage der Risswachstumsanalyse mit den Online-Messdaten prognostisch ermittelt werden, nach welcher Zyklenzahl der angesetzten künftigen Wechselbelastung der angenommene Riss im Bauteil seine kritische Größe erreichen wird. Diese Zyklenzahl und das dazu gehörige Zeitintervall stellt die Obergrenze für das zulässige Inspektionsintervall dar, vermindert um definierte Sicherheitsfaktoren zur Absicherung von Streuung und Unsicherheiten in den Eingabeparametern der Berechnungsmethode.

Die Risswachstumsanalyse erfolgt also auf Basis der mit dem Online-Monitoring erfassten tatsächlichen Belastungsdaten. Ein solches System kann jederzeit die Zeit oder Zyklenzahl bis zur nächsten fälligen Inspektion für das jeweilige Bauteil ausgeben und dem Anlagenbetreiber als Planungsgrundlage für eine koordinierte Inspektions- und Wartungsplanung dienen.

Die Erfindung wird nun anhand der beiliegenden Figuren und eines Ausführungsbeispiels näher erläutert.

Figur 1 zeigt schematisch die Lebensdauerbausteine eines belasteten Bauteils bei überwiegend zyklischer Belastung;
Figur 2 zeigt ein Ablaufdiagramm des erfindungsgemäßen Verfahrens gemäß einer ersten Ausführungsform;
Figur 3 zeigt schematisch ein Risswachstumsdiagramm mit einer erfindungsgemäßen Prognose.

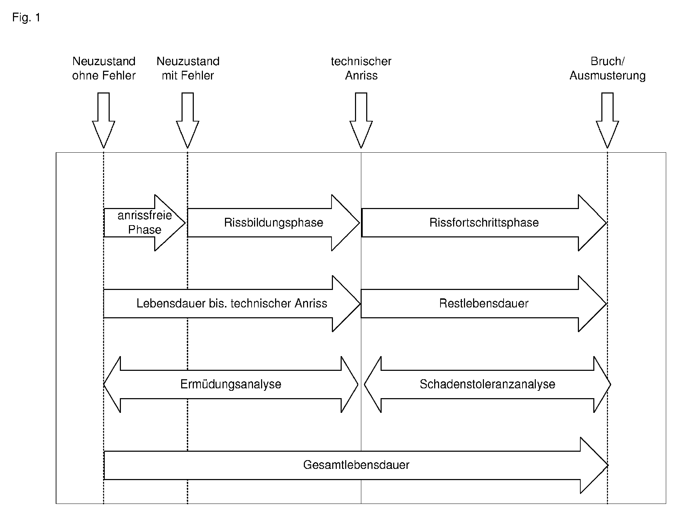

Die in Figur 1 gezeigten Komponenten der Gesamtlebensdauer eines Bauteils wurden bereits oben eingeführt. Von der Inbetriebnahme eines Bauteils bis zum Versagen oder der Ausmusterung durchläuft das Bauteil zwei wesentliche Abschnitte der Lebensdauer. Der erste Abschnitt erstreckt sich von dem Neuzustand bis zum tatsächlichen (erfassbaren) technischen Anriss. Dieser erste Abschnitt der Ermüdung des Bauteils ist der Ermüdungsanalyse zugänglich. Für solche Ermüdungsanalysen existieren Online-Systeme, welche die Ermüdung anhand von aktuellen gemessenen Belastungsdaten berechnen.

Der sich anschließende zweite Lebensdauerabschnitt ist die Rissfortschrittsphase, in der sich der Anriss vertieft (Makrorisswachstum). Die Dauer dieses zweiten Abschnitts ist die Restlebensdauer des Bauteils. Rissfortschritte oder auch das Makrorisswachstum sind grundsätzlich durch eine Schadenstoleranzanlyse berechenbar, gemäß der Erfindung werden diese Rissfortschrittsberechnungen jedoch ebenfalls durch Online-Daten gespeist. Die Restlebensdauer wird entsprechend in einem Online-System anhand der tatsächlich erfassten Belastungsdaten berechnet und die Restlebensdauer kann in Abhängigkeit von der tatsächlichen Belastung besser ausgeschöpft werden. Die Erfindung betrifft also die genauere Kalkulation und Prognose der Restlebensdauer durch ein Online-System, und damit den zweiten Abschnitt der Gesamtlebensdauer.

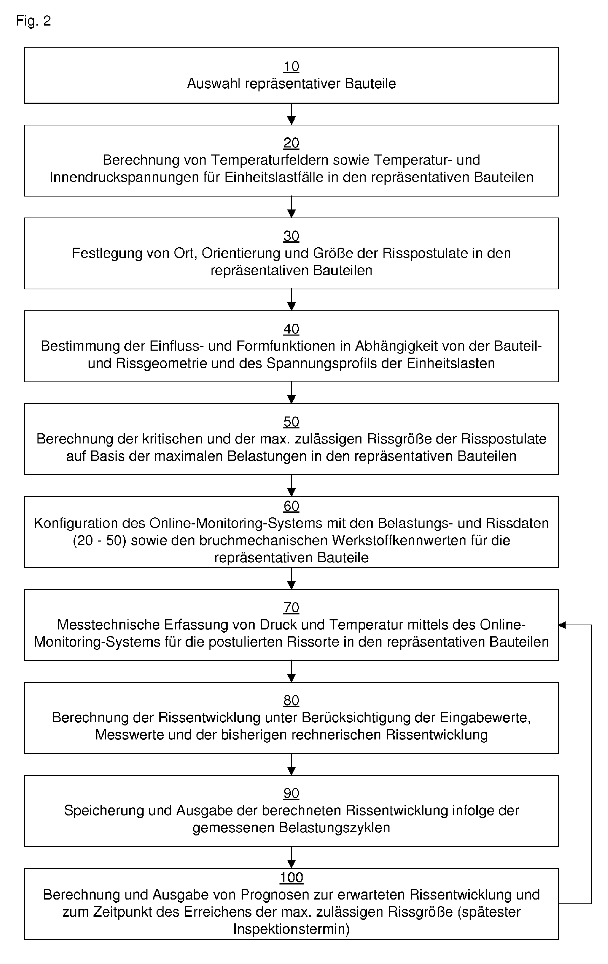

In Fig. 2 ist ein Ablaufschema der Erfindung dargestellt.

In einem ersten Schritt 10 des erfindungsgemäßen Verfahrens gemäß einer ersten Ausführungsform werden repräsentative Bauteile als die zu überwachenden Bauteile einer Kraftwerksanlage ausgewählt. Dies erfordert es, die ermüdungstechnisch hochbelasteten Bauteile zu identifizieren. Auswahlkriterium kann zum Beispiel der aktuelle rechnerische Erschöpfungsgrad aus der Ermüdungsanalyse der Bauteile sein, der vom Online-Monitoring-System ermittelt und ausgegeben wird. Es kann eine längere Historie berücksichtigt werden, aber es genügt in vielen Fällen auch, die Bewertung der aktuellen Fahrweise und der zurückliegenden wenigen Monate zu berücksichtigen. Darüber hinaus können jederzeit Bauteile ausgewählt werden, die aufgrund betrieblicher Erfahrung (zurückliegende Bauteilinspektionen) oder einer erheblichen Belastung (beispielsweise Kondensation) beachtenswert erscheinen.

In einem nächsten Schritt 20 werden die Temperaturfeld- und Spannungsanalysen für Einheitslastfälle (Innendruckbelastung und Temperaturgradienten) an den ausgewählten Bauteilen durchgeführt. Dies geschieht mittels der Finite Elemente Methode (FEM) oder auch mit analytischen Methoden. Hierbei kann ggf. auf die bereits im Online-Monitoring-System implementierten Spannungslösungen zurückgegriffen werden. Zu beachten ist hierbei, dass in der Ermüdungsanalyse als Belastungsgrößen Vergleichsspannungsschwingbreiten betrachtet werden, in der Schadenstoleranzanalyse auf Basis der linear-elastischen Bruchmechanik jedoch Hauptspannungen und Hauptspannungsschwingbreiten. Zu beachten ist weiterhin, dass für die Ermüdungsanalyse meist nur die Spannungsberechnung für die Bauteiloberfläche erfolgt, für die bruchmechanische Analyse jedoch der Spannungsverlauf über der gesamten Bauteilwanddicke am Ort des zu erwartenden Risswachstums erforderlich ist.

Bei durchgehender Verwendung linear-elastischer Materialgesetze ist es möglich, die Spannungsanteile aufgrund von Innendruck $\sigma(p)$ und thermischen Transienten $\sigma(\dot{T})$ getrennt zu berechnen und anschließend faktorisiert zu überlagern. Die Spannungsanteile $\sigma(p)$ und $\sigma(\dot{T})$ sind jedoch ggf. über der Bauteilwanddicke, je nach Bauteilgeometrie, nichtlinear. Eine polynomische Approximation des resultierenden Spannungsverlaufs über die Wanddicke kann daher sinnvoll sein:

$$\sigma(x) = \sigma_0 \sum_{n=0}^{3} A_n x^n \ .$$

Die hier verwendete Polynom-Approximation 3. Grades für das Spannungsprofil ist beispielhaft, es sind auch andere ganzzahlige Höchstwerte für n möglich und üblich.

Sowohl die Temperaturfeld- und Spannungsberechnungsergebnisse als auch die Auswahl der Bauteile werden zusammengeführt zu einem Katalog der Spannungsapproximationen für die Innendruckbelastungen und thermischen Transienten an den lokalen Bauteilbereichen der ausgewählten repräsentativen Bauteile.

Die vorgenannten Schritte 10 und 20 sind Vorbereitungen in diesem Ausführungsbeispiel der Erfindung. Diese Vorarbeiten dienen in diesem Ausführungsbeispiel zur Bestimmung der potentiellen Anrissorte in den repräsentativen Bauteilen im Schritt 30. Als Auswahlkriterium kann dazu jedes lokale Spannungsmaximum in den ausgewählten Bauteilen dienen und auch, sofern vorliegend, ein lokaler rechnerischer Erschöpfungsgrad der Bauteilbereiche. In anderen Ausführungsformen der Erfindung oder auch ergänzend können die potentiellen Anrissorte im Bauteil unter Einsatz der Extended Finite Element Methode (XFEM-Methode) abgesichert werden. Die Kombination der XFEM-Methode und der FEM-Spannungsanalysen ermöglicht es außerdem, sich entwickelnde Rissgeometrien und Ausbreitungsrichtungen wachsender, potentieller Anrisse sowohl für überwiegende Innendruck- als auch für kombinierte thermische und Innendruckbelastungen zu ermitteln, unabhängig von der Risswachstumsgeschwindigkeit.

In dieser Ausführungsform der Erfindung wird für die Einbeziehung der Online-Daten in die Rissausbreitungsberechnung außerdem eine Eingabe einer Anfangsrissgröße vorgesehen. Dafür muss ausgeschlossen sein, dass im Bauteil bereits ein größerer Riss vorliegt als die postulierte Rissgröße, mit der die Online-Analyse gestartet wird. Entsprechend ist es für die ausgewählten Bauteile erforderlich, eine Prüfung auf Rissfreiheit oder Freiheit von registrierungspflichtigen Anzeigen durchzuführen. Dies kann mit anerkannten Prüfmitteln (Endoskopie, Farbeindringprüfung, Magnetpulverprüfung, Ultraschallprüfung oder ähnlichem) erfolgen. Die Anfangsrisstiefe wird in diesem Ausführungsbeispiel auf die Nachweisgrenze $a_{det}$ der jeweils eingesetzten Prüfmethode festgelegt.

Gemäß diesem Ausführungsbeispiel der Erfindung wird in Schritt 40 analog zur Spannungsberechnung für Einheitslasten auch eine Ableitung von Einflussfunktionen $G_n$ für die Spannungsintensitätsfaktoren vorgenommen.

Im betrachteten Fall ist der Rissöffnungsmode I für die Rissausbreitung ausschlaggebend, die Zugspannungen senkrecht zur Rissebene führen zur Öffnung des Risses und dessen Weiterreißen. Die Berechnung des Mode I-Spannungsintensitätsfaktors $K_I$ für einen Riss der Tiefe a basiert daher auf den elastischen Spannungen $\sigma$, die senkrecht zur Rissebene im Bauteil ohne Riss auftreten würden:

$$K_I(a) = \sigma \cdot \sqrt{\pi a} \cdot Y$$

$Y$ stellt hierbei einen von der Bauteil- und Rissgröße abhängigen Geometriefaktor dar. Wenn das Spannungsprofil über der Wanddicke $\sigma(x)$ als Polynomapproximation vorliegt (s. o.), so kann der Spannungsintensitätsfaktor $K_I$ mit Hilfe von Einflussfunktionen $G_n$ berechnet werden, die auch die Bauteil- und Rissgrößenabhängigkeit des Geometriefaktors Y enthalten:

$$K_I(a) = \sigma_0 \cdot \sqrt{\pi a} \cdot \sum_{n=0}^{3} A_n G_n x^n$$

In bruchmechanischen Regelwerken und Kompendien liegen Zusammenstellungen von Einflussfunktionen $G_n$ für Standardgeometrien vor. Sofern die ausgewählten Bauteile und die potentiellen Anrissorte gemäß den vorangegangenen Schritten nicht durch Standardlösungen abgedeckt sind, so sind FEM-Berechnungen mit Rissmodellierungen in den Bauteilen zur Ermittlung der Einflussfunktionen $G_n$ aus den berechneten Spannungsintensitätsfaktoren erforderlich.

Im Konzept der linear-elastischen Bruchmechanik erfolgt eine instabile Ausbreitung (Bauteilbruch oder Leck) eines vorhandenen Risses, wenn der Spannungsintensitätsfaktor $K_I$ die werkstoffabhängige Bruchzähigkeit $K_{Ic}$ übersteigt. Um auch die Möglichkeit des Versagens durch plastischen Kollaps einzubeziehen, sind gegebenenfalls auch fließbruchmechanische Betrachtungen notwendig. Die kritische Risstiefe $a_{krit}$ wird im Schritt 50 offline für jede herausgearbeitete potentielle Anrisslage und Rissebene unter Zugrundelegung der größten wirkenden Belastungen im Betrieb der repräsentativen Bauteile berechnet. Vermindert um definierte Sicherheitsfaktoren ergibt sich aus der kritischen Risstiefe $a_{krit}$ die maximal zulässige Risstiefe $a_{zul}$.

In Schritt 60 ist die Konfiguration des Online-Monitoring-Systems mit den in den Schritten 10 - 50 ermittelten Daten vorgesehen. Im Online-Monitoring wird sichergestellt, dass die Parameter der Temperatur T und des Druckes $p$ an den Orten der postulierten Anrisslagen und potentiellen Rissentwicklungen korrekt erfasst werden, um hieraus für alle Messzeitpunkte das Spannungsprofil über der Wanddicke $\sigma(x)$ der repräsentativen Bauteile berechnen zu können. Weiterhin wird das Online-Monitoring-System mit den Einflussfunktionen $G_n$ für die Spannungsintensitätsfaktoren und mit der kritischen Risstiefe $a_{krit}$ sowie der maximal zulässigen Risstiefe $a_{zul}$ konfiguriert. Es erfolgt weiterhin die Eingabe der Materialparameter C, m, $\Delta K_{threshold}$ (Schwellenwert für weitere Rissausbreitung) für die Risswachstumsgleichung (evtl. Eingabe weiterer Parameter bei modifizierter Rissswachstumsgleichung) sowie der Bruchzähigkeit $K_{Ic}$.

Ein derart entsprechend konfiguriertes Online-Monitoring-System ist dann zum Durchführen der erfindungsgemäßen Online-Berechnung einer Rissausbreitung vorbereitet.

In den weiteren Schritten 70 bis 100 wird der eigentliche Erfindungsgedanke umgesetzt, nämlich die Implementierung der Schadenstoleranzanalyse in das Online-Monitoring-System.

Die messtechnische Erfassung von Innendruck $p$ und Temperatur T sowie die hierauf aufbauende Lastwechsel- und Spannungsschwingbreitenzählung bei Schritt 70 in dem Online-Monitoring-System kann dabei aus der Erfassung und Berechnung der Wechselerschöpfung (Ermüdungsanalyse) vorhandener Systeme übernommen werden. Allerdings müssen hier die Hauptspannungen anstelle der Vergleichsspannungen ermittelt werden, s. o.

In Schritt 80 erfolgt die Berechnung des Risszuwachses für den Auswertungszyklus (Spannungsschwingbreite). Die grundsätzlichen Möglichkeiten und Methoden zur Rissausbreitungsberechnung sind in Fachkreisen bekannt; wesentlich ist, dass erfindungsgemäß jederzeit die tatsächlichen Messdaten der Bauteilbelastung zur Berechnung verwendet werden und die Rissentwicklung auf Grundlage wiederholt erfasster Belastungsdaten immer weiter fortgeschrieben wird. Lediglich beispielhaft wird eine mögliche Vorgehensweise skizziert:

Für die einzelnen erfassten Spannungsschwingbreiten zwischen $\sigma_{max}(x)$ zum Messzeitpunkt $t_1$ und $\sigma_{min}(x)$ zum Messzeitpunkt $t_2$ am Ort des postulierten Anfangsrisses im repräsentativen Bauteil werden im Online-Monitoring-System die Spannungsintensitätsfaktor-Schwingbreiten

$$\Delta K_I(a) = K_{I\_\max}(a, \sigma_{\max}) - K_{I-\min}(a, \sigma_{\min})$$

berechnet. Hieraus wird das inkrementelle Risswachstum *da* für jede Schwingbreite mit der Risswachstumsgleichung (nach Paris-Erdogan bzw. einer Modifikation/Erweiterung) berechnet (wobei die Lastwechselzahl für eine einzelne Schwingbreite N = 1 beträgt):

$$\frac{da}{dN} = C \cdot \Delta K_I{}^m$$

Falls jedoch $\Delta K_I(a) < \Delta K_{threshold}$ gilt, so beträgt das inkrementelle Risswachstum für diesen Lastwechsel *da* = 0.

Die aktuelle (postulierte) Risstiefe a ergibt sich durch das Addieren des inkrementellen Risswachstums *da* zur vorherigen Risstiefe $a_0$

$$a = a_0 + da$$

Dieser Berechnungsschritt wird für jede aus den T- und *p*-Messdaten berechnete Spannungsschwingbreite online vollzogen.

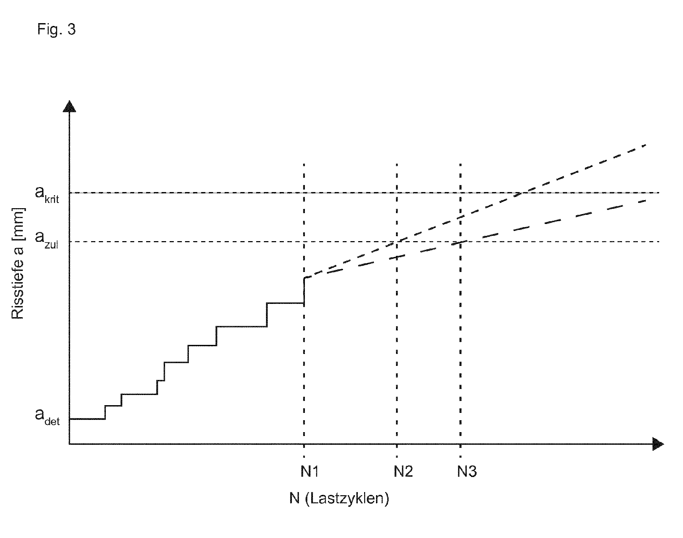

Als Ergebnis kann für jedes überwachte Bauteil bei Schritt 90 das jeweils aktuelle Rissfortschrittsdiagramm ausgegeben werden, ausgehend vom Anfangsrisspostulat bis zum aktuellen Zeitpunkt, siehe Figur 3. Die Fortsetzung der rechnerischen Risswachstumskurve des postulierten Risses ab dem Zeitpunkt "heute" erfolgt bei Schritt 100 dann durch Extrapolation auf Grundlage der bisherigen rechnerischen Rissentwicklung. Diese Extrapolation kann auf Basis statistischer Modelle bei Voraussetzungen einer tendenziell gleichbleibenden Wechselbelastung der Komponente im künftigen Leistungsbetrieb erfolgen. Diese Informationen können von den Betreibern zur Planung sinnvoller Zeitpunkte für die Inspektion vor Erreichen der maximal zulässigen Risstiefe $a_{zul}$ als spätestem Inspektionstermin herangezogen werden. Außerdem kann eine Warnung eingerichtet werden, wenn die vorher im Schritt 50 berechnete und im Schritt 60 eingegebene maximal zulässige Risstiefe $a_{zul}$ nahezu erreicht ist. Erreicht oder überschreitet die Risstiefe a des postulierten Anrisses rechnerisch die maximal zulässige Risstiefe $a_{zul}$, muss das Online-Monitoring-System eine Meldung ausgeben.

Fig. 3 verdeutlicht die Ergebnisse einer Rissfortschrittsanalyse anhand einer schematischen Grafik. In Abhängigkeit von der Anzahl der absolvierten Lastzyklen N vertieft sich ein Riss in einem Bauteil von der Anfangstiefe $a_{det}$ stufenweise bis zu einer zulässigen Maximaltiefe $a_{zul}$. Die rechnerische Risstiefe a wird dabei erfindungsgemäß in Abhängigkeit von den tatsächlich mit dem Online-System erfassten Lastzyklen aktualisiert. Die Berechnung ist nach einer Anzahl von Lastzyklen N1 bis zu einer aktuellen Risstiefe fortgeschritten. Von dem aktuellen Lastzyklenstand N1 ist es möglich, Prognosen für die Lastzyklen N2 und N3 zu extrapolieren. Dies sind Lastzyklenstände, zwischen denen voraussichtlich die maximal zulässige Risstiefe $a_{zul}$ erreicht wird. Die zugehörigen Zeitpunkte können anhand der Annahme kalkuliert werden, dass die Lastwechselbeanspruchungen eines vorgegebenen zurückliegenden Zeitraums beibehalten werden. Aus dieser Darstellung wird der Vorteil der Erfindung besonders deutlich. Das Risswachstum verläuft in starker Abhängigkeit von den Lastwechseln und den zugehörigen Belastungen. Entsprechend steigt das Risswachstum in unterschiedlichen Schrittweiten und das erfindungsgemäße Online-System kann die Risswachstumsberechnungen entsprechend berücksichtigen. Der Betrieb der Anlage wird ökonomischer und sicherer.

Das erfindungsgemäße Verfahren bietet damit eine Erhöhung der Sicherheit beim Betrieb von energieerzeugenden Anlagen oder allgemeinen Prozessanlagen, da die tatsächliche Belastung der Bauteile zur Bestimmung von maximal zulässigen Inspektionsintervallen mittels der Schadenstoleranzanalyse herangezogen wird und damit die Überwachungsergebnisse deutlich spezifischer und individueller sind als bei den herkömmlichen Lösungen. Dies wird ermöglicht, indem eine online-gespeiste Rissausbreitungsberechnung für die Überwachung und Planung eines Anlagenbetriebs herangezogen wird.

**Patentansprüche**

1. Verfahren zur Betriebskontrolle von Kraftwerksanlagen oder Prozessanlagen, wobei die Anlage durch Lastwechsel belastete Bauteile aufweist,

wobei zu wenigstens einem der Bauteile während des Betriebs wiederholt Messdaten des auf das Bauteil einwirkenden Drucks $p_t$ und/oder der vorherrschenden Temperaturen $T_t$ erfasst und in ein Online-Monitoring-System gespeist werden,

wobei in dem Online-Monitoring-System ein Modell des wenigstens einen Bauteils mit den Online-Daten gespeist wird und eine Modellrechnung der Beanspruchung des Bauteils vorgenommen wird und wobei wiederholt aktualisierte Kennwerte der Beanspruchung ausgegeben und gespeichert werden,

**dadurch gekennzeichnet,**

**dass** in dem Online-Monitoring-System unter Verwendung der Online-Daten und eines Rissentwicklungsmodells eine Online-Risswachstumsberechnung für das wenigstens eine Bauteil durchgeführt wird, wobei für jede Risswachstumsberechnung anfänglich wenigstens ein Start-Rissparameter $a_{init}$ vorgegeben wird und die Rissparameter wiederholt aktualisiert und als Kennwerte $a_t$ der Beanspruchung ausgegeben und gespeichert werden.

2. Verfahren nach Anspruch 1, wobei als Start-Rissparameter eine Anfangs-Risstiefe vorgegeben wird, welche größer oder gleich dem 1-fachen, vorzugsweise gleich dem 2-fachen der unteren Nachweisgrenze $a_{det}$ einer am Bauteil eingesetzten Rissprüfmethode ist.

3. Verfahren nach Anspruch 1 oder 2, wobei zum Start des Verfahrens für das wenigstens eine Bauteil wenigstens eine potenzielle Risslage aus einem Modell des Bauteils mittels der Extended Finite Elemente Methode (XFEM) bestimmt wird und zu dieser Risslage die Rissausbreitung unter Berücksichtigung der Online-Daten aktualisiert wird.

4. Verfahren nach einem der vorangehenden Ansprüche, wobei zu mehreren Bauteilen jeweils unter Einbeziehung zugehöriger Online-Daten Modellberechnungen zur Rissausbreitung durchgeführt werden und zu jedem der Bauteile die Kennwerte $a_t$ der Beanspruchung (Rissparameter) wiederholt aktualisiert, ausgegeben und gespeichert werden.

5. Verfahren nach einem der vorangehenden Ansprüche, wobei zu wenigstens einem Bauteil zu mehreren Risslagen Modellberechnungen zur Rissausbreitung durchgeführt werden und zu jeder der Risslagen die Kennwerte $a_t$ der Beanspruchung (Rissparameter) wiederholt aktualisiert, ausgegeben und gespeichert werden.

6. Verfahren nach einem der vorangehenden Ansprüche, wobei in dem Online-Monitoring-System zu jeder Rissausbreitungsberechnung eine Extrapolationsberechnung zur Prognose der zukünftigen Rissausbreitung auf Basis der bis dahin gespeicherten Kennwerte $a_t$ der Beanspruchung (Rissparameter) durchgeführt wird.

7. Verfahren nach Anspruch 6, wobei zu jeder Rissausbreitungsberechnung ein zugeordneter maximal zulässiger Risskennwert, insbesondere eine maximal zulässige Risstiefe $a_{zul}$, vorgegeben und gespeichert wird und die aktualisierten Rissparameter $a_t$ mit dem gespeicherten maximal zulässigen Risskennwert $a_{zul}$ verglichen werden.

8. Verfahren nach Anspruch 7, wobei das Ergebnis der Extrapolationsberechnung des Rissparameters $a_t$ mit dem maximal zulässigen Risskennwert $a_{zul}$ verglichen wird, um einen Zeitpunkt t zu bestimmen, zu dem der Rissparameter $a_t$ den Wert $a_{zul}$ erreicht.

Fig. 1

Fig. 2

```
┌─────────────────────────────────────────────────────────────────┐
│                              10                                    │
│                Auswahl repräsentativer Bauteile                    │
└─────────────────────────────────────────────────────────────────┘
                                  ↓
┌─────────────────────────────────────────────────────────────────┐
│                              20                                    │
│       Berechnung von Temperaturfeldern sowie Temperatur- und       │
│  Innendruckspannungen für Einheitslastfälle in den repräsentativen Bauteilen │
└─────────────────────────────────────────────────────────────────┘
                                  ↓
┌─────────────────────────────────────────────────────────────────┐
│                              30                                    │
│      Festlegung von Ort, Orientierung und Größe der Risspostulate in den │
│                       repräsentativen Bauteilen                    │
└─────────────────────────────────────────────────────────────────┘
                                  ↓
┌─────────────────────────────────────────────────────────────────┐
│                              40                                    │
│   Bestimmung der Einfluss- und Formfunktionen in Abhängigkeit von der Bauteil- │
│    und Rissgeometrie und des Spannungsprofils der Einheitslasten   │
└─────────────────────────────────────────────────────────────────┘
                                  ↓
┌─────────────────────────────────────────────────────────────────┐
│                              50                                    │
│  Berechnung der kritischen und der max. zulässigen Rissgröße der Risspostulate │
│    auf Basis der maximalen Belastungen in den repräsentativen Bauteilen │
└─────────────────────────────────────────────────────────────────┘
                                  ↓
┌─────────────────────────────────────────────────────────────────┐
│                              60                                    │
│  Konfiguration des Online-Monitoring-Systems mit den Belastungs- und Rissdaten │
│      (20 - 50) sowie den bruchmechanischen Werkstoffkennwerten für die │
│                       repräsentativen Bauteile                     │
└─────────────────────────────────────────────────────────────────┘
                                  ↓
┌─────────────────────────────────────────────────────────────────┐
│                              70                                    │
│    Messtechnische Erfassung von Druck und Temperatur mittels des Online- │◄──┐
│  Monitoring-Systems für die postulierten Rissorte in den repräsentativen Bauteilen │   │
└─────────────────────────────────────────────────────────────────┘   │
                                  ↓                                     │
┌─────────────────────────────────────────────────────────────────┐   │
│                              80                                    │   │
│   Berechnung der Rissentwicklung unter Berücksichtigung der Eingabewerte, │   │
│    Messwerte und der bisherigen rechnerischen Rissentwicklung      │   │
└─────────────────────────────────────────────────────────────────┘   │
                                  ↓                                     │
┌─────────────────────────────────────────────────────────────────┐   │
│                              90                                    │   │
│    Speicherung und Ausgabe der berechneten Rissentwicklung infolge der │   │
│                   gemessenen Belastungszyklen                      │   │
└─────────────────────────────────────────────────────────────────┘   │
                                  ↓                                     │
┌─────────────────────────────────────────────────────────────────┐   │
│                             100                                    │   │
│  Berechnung und Ausgabe von Prognosen zur erwarteten Rissentwicklung und │───┘
│    zum Zeitpunkt des Erreichens der max. zulässigen Rissgröße (spätester │
│                       Inspektionstermin)                           │
└─────────────────────────────────────────────────────────────────┘
```

EP 3 093 724 A1

Fig. 3

11

**Europäisches Patentamt**
**European Patent Office**
**Office européen des brevets**

# EUROPÄISCHER RECHERCHENBERICHT

**Nummer der Anmeldung**

EP 15 16 7398

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | R Daga ET AL: "A consideration of the real-time remnant life assessment of a HRH pipe bend", , 1. Mai 2008 (2008-05-01), XP055222106, Gefunden im Internet: URL:http://www.ommi.co.uk/PDF/Articles/155.pdf [gefunden am 2015-10-20] * das ganze Dokument * ----- | 1-8 | INV. G05B23/02 |
| X | SAMAL M K ET AL: "A finite element program for on-line life assessment of critical plant components", ENGINEERING FAILURE ANALYSIS, PERGAMON, GB, Bd. 16, Nr. 1, 1. Januar 2009 (2009-01-01), Seiten 85-111, XP025560774, ISSN: 1350-6307, DOI: 10.1016/J.ENGFAILANAL.2008.01.007 [gefunden am 2008-02-08] * das ganze Dokument * ----- | 1-8 | |
| X | US 4 756 194 A (GRANDPIERRE LOIC [FR] ET AL) 12. Juli 1988 (1988-07-12) * das ganze Dokument * ----- | 1-8 | RECHERCHIERTE SACHGEBIETE (IPC) G05B G01N |
| X | PASCOE S K ET AL: "Predictive stress and crack growth monitoring in cracked superheater headers", LIFE MANAGEMENT OF POWER PLANTS, 1994., INTERNATIONAL CONFERENCE ON EDINBURGH, UK, LONDON, UK,IEE, UK, 1. Januar 1994 (1994-01-01), Seiten 120-127, XP006527418, ISBN: 978-0-85296-627-3 * das ganze Dokument * ----- | 1-8 | |

-/--

Der vorliegende Recherchenbericht wurde für alle Patentansprüche erstellt

| Recherchenort | Abschlußdatum der Recherche | Prüfer |
|---|---|---|
| München | 21. Oktober 2015 | Schriefl, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

**Nummer der Anmeldung**

EP 15 16 7398

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2004/225474 A1 (GOLDFINE NEIL J [US] ET AL) 11. November 2004 (2004-11-11) * Absatz [0005] * ----- | 3 | |
| T | ZERBST U ET AL: "Fracture mechanics as a tool in failure analysis - Prospects and limitat", ENGINEERING FAILURE ANALYSIS, Bd. 55, 7. Juli 2015 (2015-07-07), Seiten 376-410, XP029263278, ISSN: 1350-6307, DOI: 10.1016/J.ENGFAILANAL.2015.07.001 * das ganze Dokument * ----- | | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 21. Oktober 2015 | Schriefl, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 16 7398

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2015

| Im Recherchenbericht angeführtes Patentdokument | Datum der Veröffentlichung | Mitglied(er) der Patentfamilie | Datum der Veröffentlichung |
|---|---|---|---|
| US 4756194 A | 12-07-1988 | CA 1257700 A<br>DE 3677747 D1<br>EP 0230182 A1<br>FR 2591742 A1<br>JP S62145155 A<br>US 4756194 A | 18-07-1989<br>04-04-1991<br>29-07-1987<br>19-06-1987<br>29-06-1987<br>12-07-1988 |
| US 2004225474 A1 | 11-11-2004 | GB 2414809 A<br>US 2004225474 A1<br>WO 2004066044 A1 | 07-12-2005<br>11-11-2004<br>05-08-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140257666 A1
- US 20140019091 A1
- EP 2736003 A1

**In der Beschreibung aufgeführte Nicht-Patentliteratur**

- **J. WAGNER ; P. DEESKOW.** Trend Prognosis and Online Diagnostics of Thick-Walled Boiler Components for a Flexible Mode of Operation. *ASME 2014 Pressure Vessels & Piping Conference,* 20. Juli 2014